# EUROPEAN PATENT SPECIFICATION

(11) **EP 2 386 398 B1**
(45) Date of publication and mention of the grant of the patent: **10.07.2013**
(21) Application number: 10425159.0
(22) Date of filing: 14.05.2010
(51) Int. Cl.: B29C 44/14, B29C 44/58, B29C 51/10

(54) **A method for producing a foamed article**
Verfahren zur Herstellung eines geschäumten Artikels
Procédé de production d'un article en mousse

(43) Date of publication of application: 16.11.2011
(73) Proprietor: Tecnocad Progetti S.p.A., 10135 Torino (IT)
(72) Inventor: Buono, Frabrizio, 10135 Torino (IT)
(74) Representative: Marchitelli, Mauro

(56) References cited:
- EP-A2- 0 965 425
- EP-A2- 2 003 089
- DE-A1-102004 023 582
- FR-A1- 2 882 959
- US-A- 4 987 666
- US-A1- 2003 164 576

## Description

### Field of the invention

The present invention relates to a method for producing a foamed article that includes a supporting element, a layer of foamed material, and a sewn upholstery cover applied on the layer of foamed material.

The present invention has been developed with particular regard to the field of production of foamed articles for vehicles, such as for example dashboards, upholstered panels for doors and the like. The invention relates in particular to the production of foamed articles provided with upholstery covers made of natural leather or fabric, or sewn quality upholstery covers. An example of a known method can be found in EP 0 965 425 A2.

### Description of the known art

Foamed articles for vehicles, such as for example certain dashboards, comprise a supporting element made of rigid plastic material, an upholstery covering and a layer of foamed plastic material set between the upholstery covering and the supporting element made of rigid plastic material. The production of articles of this sort is obtained using a foaming die including a bottom die and a plunger, which, in a closed position, define a foaming cavity, injected and polymerized in which is a plastic foaming material, usually a polyurethane foam.

In the majority of cases, the upholstery cover is not of a sewn type. When the upholstery cover is not of a sewn type, it is applied on a positioning surface of the bottom die of the foaming die and is held in contact with said surface by suction. The supporting element of rigid plastic material is positioned on the plunger and the foaming die is closed. Foaming material is then injected in a foaming cavity formed between the upholstery cover and the supporting element.

In the case of particularly high-quality foamed articles, the upholstery cover is formed by cutting and sewing of a plurality of lengths of upholstery cover of quality material, such as for example natural leather, fabric, or embroidered covers. In these cases, it is not possible to use the method envisaged for non-sewn upholstery covers. The main problem in the case of sewn upholstery covers is the precise positioning of the rows of stitching (which have a major importance from the aesthetic standpoint) on the surface of the foamed article. The method used with non-sewn upholstery covers, which envisages setting the upholstery cover on the surface of the bottom die, is not able to ensure the precision necessary for positioning of the rows of stitching of the upholstery cover with respect to the finished article.

When it becomes necessary to provide an upholstery cover for dashboards or other foamed articles for vehicles according to the known art a foamed article is first produced without upholstery cover, and then the sewn upholstery cover is applied on the foamed article with additional operations of upholstery that envisage the use of glue for fixing the sewn upholstery cover on the layer of foamed material. These operations are basically of an artesanal nature and involve a high cost. Another drawback of the known art is that in order to provide vehicles with standard furnishing having non-sewn upholstery covers and with optional furnishing having sewn upholstery covers made of quality material, the automobile company must provide two different foaming dies; otherwise, the components with quality upholstery cover would have a greater thickness than those with non-sewn upholstery covers and would not be compatible with the housings of the foamed article provided according to design.

### Object and summary of the invention

The object of the present invention is to provide a method for producing a foamed article with a sewn upholstery cover that will enable to overcome the problems of the known art.

According to the present invention, said object is achieved by a method having the characteristics forming the subject of Claim 1.

### Brief description of the drawings

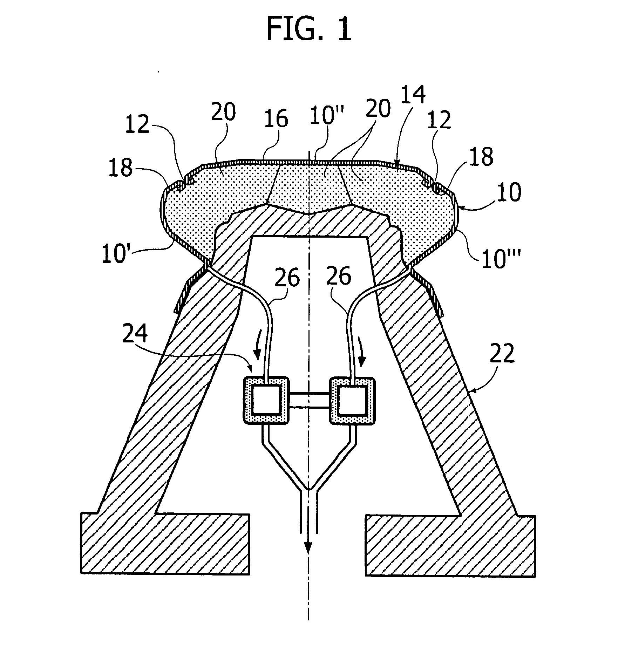

The present invention will now be described in detail with reference to the attached drawings, which are provided purely by way of non-limiting example, where Figures 1 to 6 are schematic cross sections illustrating the sequence of the steps of a method according to the present invention.

### Description of a preferred embodiment of the invention

The method according to the present invention envisages in a first step formation of an upholstery cover 10 obtained by cutting and stitching together a plurality of lengths of upholstery cover 10', 10", 10"'. The lengths of upholstery cover 10', 10", 10"' can be made of natural leather, fabric or other high-quality upholstery cover materials. The rows of stitching between the lengths of upholstery cover 10', 10", 10"' are designated by 12.

As illustrated in Figure 1, the sewn upholstery cover 10 is positioned on a positioning member 14 having a convex positioning surface 16. The rows of stitching 12 of the upholstery cover 10 are arranged in corresponding seats provided on the convex positioning surface 16. Preferably, the positioning member 14 is formed by a series of separable sectors 20. The positioning member 14 is carried by a mobile support 22. The mobile support 22 carries a suction system 24 provided with suction ducts 26 that communicate with the convex positioning surface 16. The suction system 24 creates a negative pressure between the upholstery cover 10 and the convex positioning surface 16. Said negative pressure holds the sewn upholstery cover 10 on the convex positioning surface 16 in the exact position in which it has been laid.

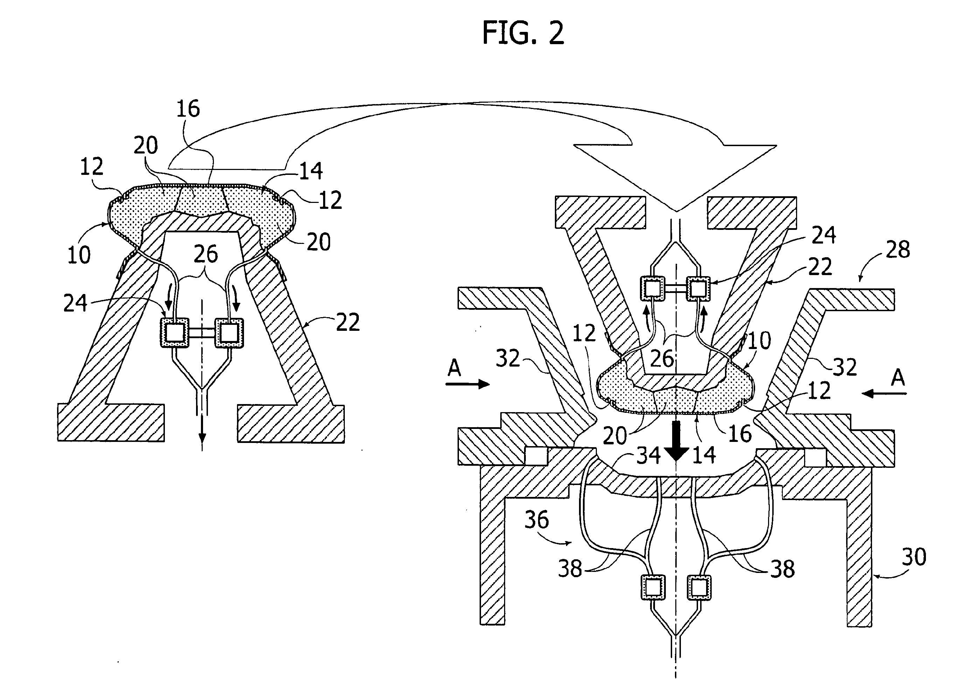

In the next step, illustrated in Figure 2, the mobile support 22 is translated manually or automatically for setting the positioning member 14 with the sewn upholstery cover 10 held thereon in the bottom die 28 of a foaming die. In the example illustrated, the bottom die 28 comprises a fixed part 30 and two mobile parts 32 that can move between an open position and a closed position in the direction indicated by the double-headed arrows A. The bottom die 28 has a concave positioning surface 34, on which there is to be positioned the upholstery cover 10. The bottom die 28 has a second suction system 36 provided with ducts 38 connected to the concave positioning surface 34.

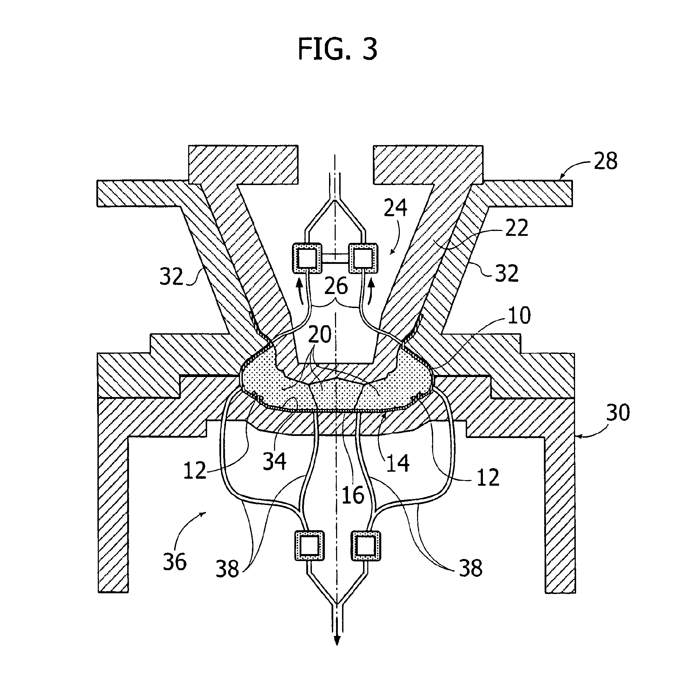

As illustrated in Figure 3, the positioning member 14 rests on the concave positioning surface 34 of the fixed part 30 of the bottom die 28. The mobile parts 32 are then closed so as to bring the bottom die 28 into the configuration of Figure 3. In this configuration, the upholstery cover 10 rests externally on the concave positioning surface 34 and is held internally by the convex positioning surface 16 of the positioning member 14.

As long as the positioning member 14 is inserted and held in the bottom die 28, the upholstery cover 10 is held by suction on the convex positioning surface 16. When the positioning member 14 is in the position illustrated in Figure 3, the first suction system 24 is deactivated, and immediately afterwards the second suction system 36 is activated. In this way, the upholstery cover 10 is held by suction in contact with the concave positioning surface 34 of the bottom die 28.

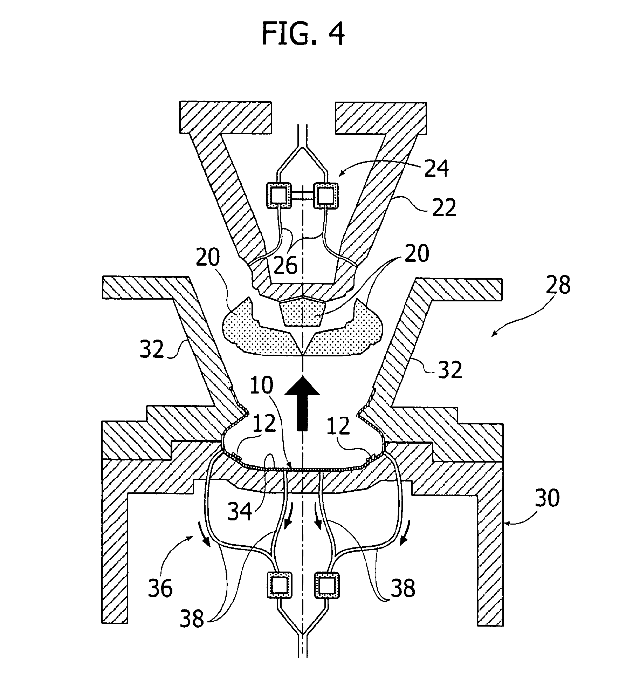

In the next step (illustrated in Figure 4), the positioning member 14 is extracted from the bottom die 28, leaving the upholstery cover 10 positioned and held by suction on the concave positioning surface 34 of the bottom die 28. In the case where the concave positioning surface 34 has the form of an undercut as illustrated in the figures, the sectors 20 that make up the positioning member 14 are taken apart as illustrated in Figure 4 to enable extraction of the positioning member 14 from the bottom die 28 without opening the mobile parts 32.

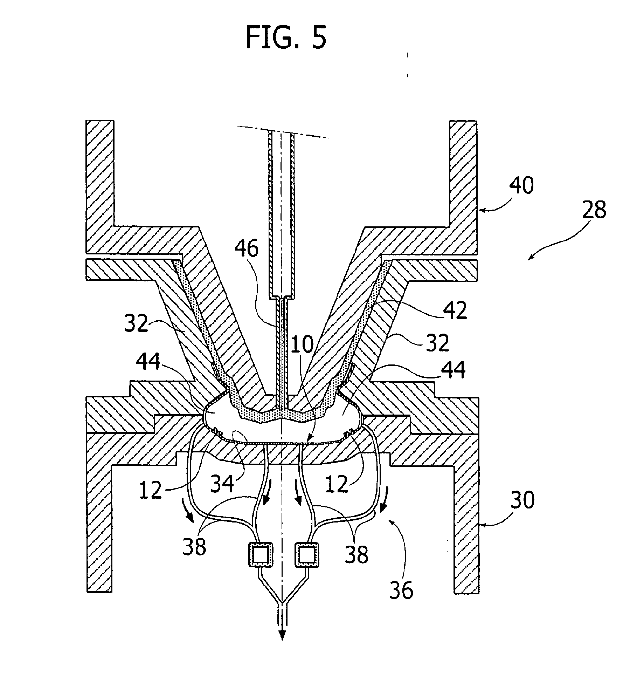

Next, a plunger 40 of the foaming die bearing a supporting element 42 made of rigid plastic material is closed on the bottom die 28, as illustrated in Figure 5. In the condition where the plunger 40 is positioned on the bottom die 28 a foaming cavity 44 is defined between a portion of outer surface of the supporting element 42 and the upholstery cover 10. The plunger 40 is connected to an injection channel 46 that communicates with the foaming cavity 44 through one or more holes provided in the supporting element 42. A foamable material, for example a polyurethane foam, is injected in the foaming cavity 44 through the injection channel 46. The foamable material polymerizes in the foaming cavity 44 and adheres firmly to the supporting element 42 and to the internal surface of the upholstery cover 10.

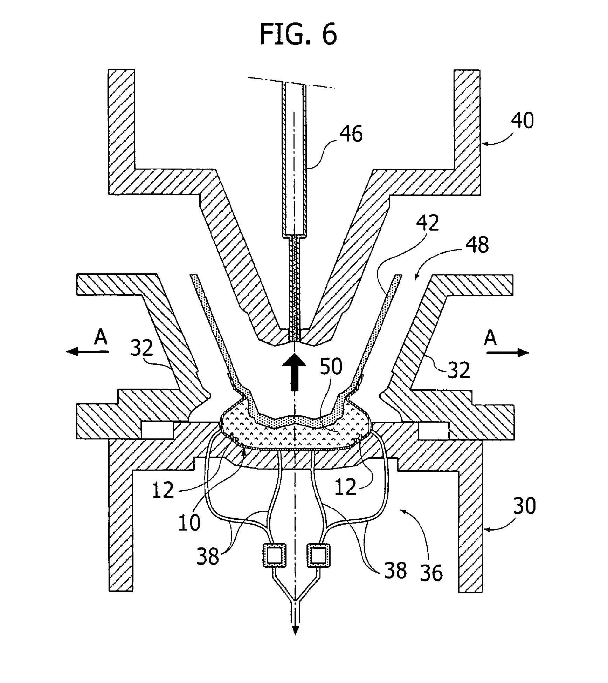

In the last step (illustrated in Figure 6), the plunger 40 is raised, and the mobile parts 32 of the bottom die 28 are opened and the suction through the second suction system 36 is interrupted.

With the method described a foamed article 48 is obtained, formed by a supporting element 42 of rigid plastic material provided with a sewn upholstery cover 10 and a foam layer 50 that joins the sewn upholstery cover 10 to the supporting element 42. Fixing the sewn upholstery cover 10 is obtained by adhesion to the foam layer 50. The sewn upholstery cover 10 is positioned with precision with respect to the foam layer 50. The overall thickness of the foam layer 50 of the upholstery cover 10 is substantially identical to the overall thickness of a foamed article with non-sewn upholstery cover. With the method according to the present invention the same foaming die can be used for producing foamed articles with non-sewn upholstery cover and with sewn upholstery cover.

The solution according to the present invention avoids the application of sewn upholstery covers with operations of upholstery and avoids the use of glue for fixing the upholstery cover to the foam layer.

## Claims

1. A method for producing a foamed article (48) including a supporting element (42), a foam layer (50), and an upholstery cover (10) applied on said foam layer (50), comprising the steps of:
- forming said upholstery cover (10) by stitching together a plurality of lengths of upholstery cover (10', 10", 10'''),
- positioning the sewn upholstery cover (10) on a convex positioning surface (16) of a positioning member (14),
- holding the sewn upholstery cover (10) on said positioning member (14) by means of a first suction system (24),
- setting said positioning member (14) with the sewn upholstery cover (10) held thereon by suction in a bottom die (28) of a foaming die,
- deactivating said first suction system (24) and holding the sewn upholstery cover (10) on a concave positioning surface (34) of said bottom die (28) by means of a second suction system (36),
- extracting said positioning member (14) from said bottom die (28) leaving said sewn upholstery cover (10) positioned and held by suction on said concave positioning surface (34),
- positioning a rigid supporting element (42) on a plunger (40) of said foaming die and closing the plunger (40) on said bottom die (28) so as to form a foaming cavity (44) between an outer surface of said supporting element (42) and said sewn upholstery cover (10), and
- injecting foaming material into said foaming cavity (44) and polymerizing the foaming material,
wherein said positioning member (14) comprises a plurality of separable sectors (20) and wherein said sectors (20) are detached from one another to enable extraction of said positioning member (14) from said bottom die (28).

2. The method according to Claim 1, wherein rows of stitching (12) of said sewn upholstery cover (10) are inserted within corresponding seats (18) formed on said convex positioning surface (16) of said positioning member (14).

## Patentansprüche

1. Ein Verfahren zum Herstellen eines geschäumten Gegenstandes (48) beinhaltend ein Tragelement (42), eine Schaumschicht (50), und einen Polsterbezug (10) angewandt auf die Schaumschicht (50), aufweisend die Schritte:
- Bilden des Polsterbezugs (10) durch Vernähen einer Mehrzahl von Längen von Polsterbezug (10', 10", 10"'),
- Anordnen des genähten Polsterbezugs (10) auf einer konvexen Positionierungsoberfläche (16) von einem Positionierungsbauteil (14),
- Halten des genähten Polsterbezugs (10) auf dem Positionierungsbauteil (14) durch ein erstes Saugsystem (24),
- Setzen des Positionierungsbauteils (14) mit dem darauf durch Saugen gehaltenen genähten Polsterbezug (10) in eine untere Matrize (28) von einer Schäumungsmatrize,
- Deaktivieren des ersten Saugsystems (24) und Halten des genähten Polsterbezugs (10) auf einer konkaven Positionierungsoberfläche (34) von der unteren Matrize (28) durch ein zweites Saugsystem (36),
- Extrahieren des Positionierungsbauteils (14) von der unteren Matrize (28), dabei den genähten Polsterbezug (10) positioniert und gehalten lassend durch Saugen auf der konkaven Positionierungsoberfläche (34),
- Positionieren eines starren Trageelements (42) auf einem Kolben (40) von der Schäumungsmatrize und Schließen des Kolbens (40) auf der unteren Matrize (28), um eine Schäumungskavität (44) zwischen einer äußeren Oberfläche von dem Trageelement (42) und dem genähten Polsterbezug (10) zu bilden, und
- Injizieren von Schäumungsmaterial in die Schäumungskavität (44) und Polymerisieren des Schäumungsmaterials,
wobei das Positionierungsbauteil (14) eine Mehrzahl von separierbaren Sektoren (20) aufweist und wobei die Sektoren (20) getrennt voneinander sind, um das Extrahieren von dem Positionierungsbauteil (14) aus der unteren Matrize (28) zu ermöglichen.

2. Das Verfahren gemäß Anspruch 1, wobei Nähreihen (12) von dem genähten Polsterbezug (10) innerhalb entsprechender Aufnahmen (18) eingefügt sind, die auf der konvexen Positionierungsoberfläche (16) von dem Positionierungsbauteil (14) gebildet sind.

## Revendications

1. Procédé de production d'un article expansé (48) comprenant un élément de support (42), une couche de mousse (50) et une housse de garniture intérieure (10) appliquée sur ladite couche de mousse (50), comprenant les étapes :
- de formation de ladite housse de garniture intérieure (10) en cousant, ensemble, une pluralité de longueurs de housse de garniture intérieure (10', 10" 10"'),
- de positionnement de la housse de garniture intérieure (10) cousue sur une surface de positionnement convexe (16) d'un élément de positionnement (14),
- de maintien de la housse de garniture intérieure (10) cousue sur ledit élément de positionnement (14) au moyen d'un premier système d'aspiration (24),
- de placement dudit élément de positionnement (14) avec la housse de garniture intérieure (10) cousue maintenue sur celui-ci par aspiration dans une matrice inférieure (28) d'une matrice d'expansion,
- de désactivation dudit premier système d'aspiration (24) et de maintien de la housse de garniture intérieure (10) cousue sur une surface de positionnement concave (34) de ladite matrice inférieure (28) au moyen d'un deuxième système d'aspiration (36),
- d'extraction dudit élément de positionnement (14) de ladite matrice inférieure (28) en laissant ladite housse de garniture intérieure (10) cousue positionnée et maintenue par aspiration sur ladite surface de positionnement concave (34),
- de positionnement d'un élément de support rigide (42) sur un piston (40) de ladite matrice d'expansion et de fermeture du piston (40) sur ladite matrice inférieure (28) de manière à former une cavité d'expansion (44) entre une surface extérieure dudit élément de support (42) et ladite housse de garniture intérieure (10) cousue, et
- d'injection d'un matériau d'expansion dans ladite cavité d'expansion (44) et de polymérisation du matériau d'expansion,
dans lequel ledit élément de positionnement (14) comprend une pluralité de secteurs (20) séparables, et dans lequel lesdits secteurs (20) sont détachés les uns des autres pour permettre l'extraction dudit élément de positionnement (14) de ladite matrice inférieure (28).

2. Procédé selon la revendication 1, dans lequel les piqûres (12) de ladite housse de garniture intérieure (10) cousue sont insérées dans des sièges (18) correspondants formés sur ladite surface de positionnement convexe (16) dudit élément de positionnement (14).
